# EUROPÄISCHE PATENTANMELDUNG

(11) **EP 0 927 622 A1**
(43) Veröffentlichungstag der Anmeldung: **07.07.1999**
(21) Anmeldenummer: 97119891.6
(22) Anmeldetag: 13.11.1997
(51) Int. Cl.: B29C 47/00, B29C 47/40, B29C 47/76

(54) **Doppelschneckenextruder**

(71) Anmelder: Gebrüder Kömmerling Kunststoffwerke GmbH, D-66954 Pirmasens (DE)
(72) Erfinder: Schuler, Werner, Dr., 66953 Pirmasens (DE)
(74) Vertreter: Vièl, Christof, Dipl.-Ing.

(57) **Zusammenfassung**

Die Erfindung betrifft einen Doppelschneckenextruder, der zwei gegensinnig drehende, dichtkämmende Schnecken aufweist.

Die zwischen der Einfüllöffnung und den Entgasungsbohrungen befindliche Kompressionszone (C) wird bei einteiligen, dichtkämmenden, gegenläufigen Doppelschneckenextrudern (sowohl parallele als auch konische) mit Förderwirkung ausgeführt. Das bedeutet, daß die Steigungsrichtung der Kompressionszone (C) mit der Steigungsrichtung der sonstigen Zonen übereinstimmt. Dies kann verschiedene Nachteile mit sich bringen, welche mit der vorliegenden Erfindung vermieden werden sollen.

Diese Aufgabe wird erfindungsgemäß dadurch gelöst, daß die Schnecken in einer zwischen der Einfüllöffnung und den Entgasungsbohrungen angeordneten Kompressionszone (C) zumindest teilweise als Ruckförderelemente mit einer im Vergleich zu den übrigen Zonen der Schnecke gegenläufigen Steigung ausgebildet sind.

## Beschreibung

Die Erfindung betrifft einen Doppelschneckenextruder, der zwei gegensinnig drehende, dichtkämmende Schnecken aufweist.

Derartige Doppelschneckenextruder sind bekannt. Bei gegensinnig drehenden, dichtkämmenden Doppelschneckenextrudern haben sich zwei Ausführungen durchgesetzt. Bei der ersten Ausführung handelt es sich um den parallelen Doppelschneckenextruder, bei dem der Schneckenaußendurchmesser, der Achsabstand und die Gangtiefe über der Schneckenlänge konstant sind.

Das bei derartigen parallelen Doppelschneckenextrudern auftretende Problem der Aufnahme der Radial- und Axialkräfte bei gegebenem Achsabstand führte Anfang der 60er Jahre zu der Entwicklung von konischen Doppelschneckenextrudern. Diese sind dadurch gekennzeichnet, daß der Schneckenaußendurchmesser und der Achsabstand von der Schneckenspitze aus betrachtet stetig zunehmen. Durch den deutlich vergrößerten Achsabstand im Getriebe war es bei diesem System möglich, entsprechend dimensionierte Wälzlager einzusetzen, die zu einer im Maschinenbau üblichen Betriebszuverlässigkeit führten.

Die konischen Doppelschneckenextruder wurden zunächst in einfach konischer Bauweise eingesetzt. Bei dieser Bauweise nehmen der Schneckenaußendurchmesser und der Schneckeninnendurchmesser von der Füllöffnung zur Schneckenspitze hin gleichmäßig ab. Die Gangtiefe bleibt konstant.

Bei dem seit Ende der 70er Jahre eingeführten doppelkonischen (superkonischen) Doppelschneckenextrudern werden die Schnecken so ausgeführt, daß der Schneckenaußendurchmesser stärker abnimmt als der Schneckeninnendurchmesser und somit die Gangtiefe von der Füllöffnung zur Schneckenspitze hin ebenfalls kleiner wird. Dies führt zu einer verstärkten Kompression.

Die Schnecken werden üblicherweise aus einem Stück gefertigt und sind somit nicht modular aufgebaut. Für das Haupteinsatzgebiet von gegensinnig drehenden Doppelschneckenextrudern, die Aufbereitung und Verarbeitung von PVC-Dryblend zu Halbzeugen, müssen die folgenden Verfahrensschritte im Extruder durchgeführt werden:
- Einziehen des Dryblends: Hierbei wird der Doppelschneckenextruder entweder aus vollem Trichter oder dosiert gefahren. Der Hauptvorteil der dosierten Fahrweise ist die erhöhte Flexibilität durch die Möglichkeit, die Drehzahl anzupassen die Hauptvorteile der dosierten Fahrweise liegen in dem einfachen Aufbau, der einfachen Bedienung und der größeren Förderkonstanz.
- Vorwärmen: Die Vorwärmzone, in der das Dryblend vorgewärmt wird, beginnt an der Trichtervorderkante mit dem Beginn des beheizten geschlossenen Zylinders und endet an der Drosselzone.
- Anplastifizieren: In der Drossel- oder Kompressionszone muß neben der mechanischen Energieeinleitung zum Anplastifizieren des vorgewärmten Dryblends auch die Abdichtung zwischen der Vakuumentgasungszone und der Einfüllzone gewährleistet werden. Hierzu muß das anplastifizierte Dryblend bis auf die Rohdichte komprimiert werden.
- Entgasen: Um ein von Blasen und Gaseinschlüssen freies Extrudat zu bekommen, muß das PVC im Extruder entgast werden. Zur Erzielung einer hohen Entgasungsleistung in Schneckenextrudern sind eine möglichst hohe Entgasungsoberfläche und eine hohe Polymertemperatur erforderlich.
- Druckaufbau und Homogenisieren: Die wesentlichen Aufgaben der Austragszone bestehen darin, den nötigen Druck zum Überfahren des Werkzeugwiderstandees aufzubauen, sowie das Material vollständig zu plastifizieren und zu homogenisieren.

Diese Verfahrensschritte werden in aufeinanderfolgenden Zonen der Schnecke zwischen dem Einfüllöffnung und dem Schneckenende durchgeführt, die als Einzugs-, Vorwärmungs-, Kompressions-, Entgasung-, Druckaufbau- und Homogenisierungszone bezeichnet werden.

Die zwischen der Einfüllöffnung und den Entgasungsbohrungen befindliche Kompressionszone wird bei einteiligen, dichtkämmenden, gegenläufigen Doppelschneckenextrudern (sowohl parallele als auch konische) mit Förderwirkung ausgeführt. Das bedeutet, daß die Steigungsrichtung der Kompressionszone mit der Steigungsrichtung der sonstigen Zonen übereinstimmt. Dies kann folgende Nachteile mit sich bringen:
- Führt man die Kompressionszone bei kleinen Einzugssteigungen aus dem Grund einer Mindeststegbreite eingängig aus, die Entgasungszone jedoch wie üblich zweigängig, so kommt es häufig zu unterschiedlichen Füllgraden in der Schnecke. Dies kann in den Entgasungsbohrungen leicht beobachtet werden. Wie Messungen des Temperaturprofils an der Schneckenspitze zeigen, bringen Füllgradunterschiede auch einen Temperaturunterschied in horizontaler Richtung mit sich.
- Bei dosierter Fahrweise kann die Kompressionswirkung durch einen zu geringen Füllgrad aufgehoben werden. Dies hat eine zu geringe Plastifizierleistung und ein stromaufwärtiges Ansaugen von Luft durch die Einfüllöffnung zur Folge.
- Durch die vorhandene Eigenförderung derartiger Kompressionszonen kann es dazu kommen, daß ein Teil des Materials nicht geschert wird. Dies führt zu Inhomogenitäten.

Aufgabe der Erfindung ist es somit, die geschilderten Nachteile zu vermeiden.

Diese Aufgabe wird erfindungsgemäß dadurch gelöst, daß die Schnecken in einer zwischen der Einfüllöffnung und den Entgasungsbohrungen angeordneten Kompressionszone zumindest teilweise als Rückförderelemente mit einer im Vergleich zu den übrigen Zonen der Schnecke gegenläufigen Steigung ausgebildet sind.

Eine Ausbildung der Erfindung besteht darin, daß sich die Rückforderelemente über 1 bis 10 Windungen, vorzugsweise über 2 bis 6 Windungen der Schnecke erstrecken.

Erfindungsgemäß ist vorgesehen, daß der Doppelschneckenextruder ein paralleler Extruder ist.

Eine andere Ausbildung der Erfindung besteht darin, daß der Doppelschneckenextruder ein konischer oder doppelkonischer Extruder ist.

Ebenfalls liegt im Rahmen der Erfindung, daß die Schnecken aus einem Stück gefertigt sind.

Die Vorteile der Erfindung bestehen im wesentlichen darin, daß durch die Ausbildung der Kompressionszone als Rückförderelemente der gesamte Materialstrom durch die Spalte gedrückt werden muß und hierbei geschert wird. Dies verhindert Inhomogenitäten. Auch bei kleinen Einzugssteigerungen kann man rückfordernde Kompressionszonen mit ausreichender Stegbreite ohne Gefahr einer zu geringen Kompressionswirkung zweigängig ausführen. Hierdurch können Füllgradunterschiede verhindert werden.

Im folgenden wird ein Ausführungsbeispiel der Erfindung anhand von Zeichnungen erläutert.

Es zeigen
- Fig. 1a: eine schematische Seitenansicht eines Doppelschneckenextruders,
- Fig. 1b: eine Seitenansicht einer Schnecke eines Doppelschneckenextruders mit den einzelnen Zonen,
- Fig. 2a: eine Detailansicht der Kompressionszone sowie der benachbarten Zonen eines herkömmlichen Doppelschneckenextruders,
- Fig. 2b: eine Detailansicht der Kompressionszone sowie der benachbarten Zonen eines erfindungsgemäßen Doppelschneckenextruders.

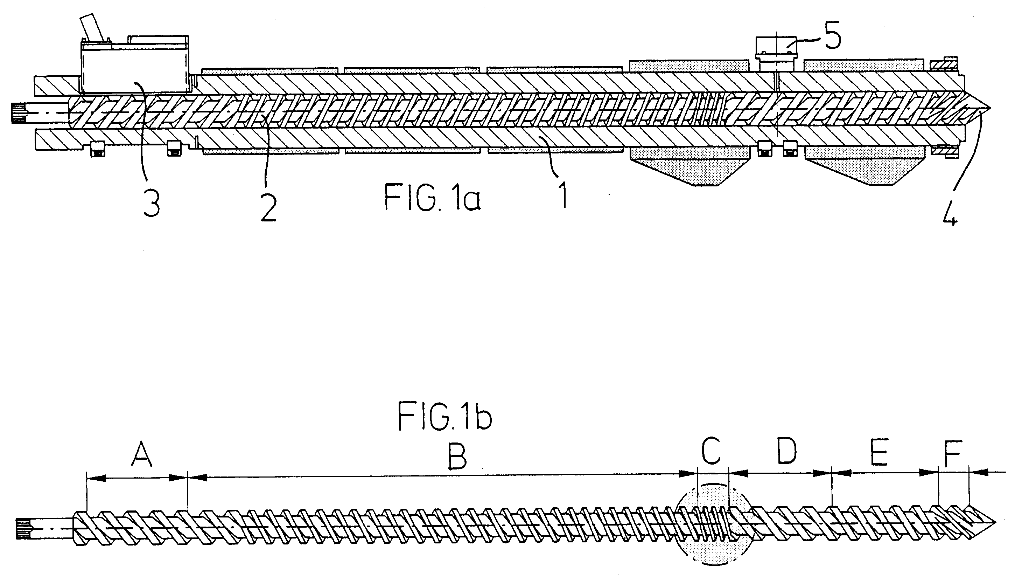

Wie aus Fig. 1a ersichtlich, besteht ein Doppelschneckenextruder aus einem Grundrahmen 1, in dem zwei Schnecken 2 angeordnet sind, die über einen Antriebsmotor (nicht dargestellt), der mit einem Getriebe (nicht dargestellt) verbunden ist, angetrieben werden. Weiterhin weist der Doppelschneckenextruder eine Dosiereinrichtung 3 oder einen Einfülltrichter (nicht dargestellt) sowie zwischen der Dosiereinrichtung 3 und der Schneckenspitze 4 eine Entgasungsvorrichtung 5 auf.

In Fig. 1b wird die Unterteilung der Schnecke 2 in einzelne Zonen dargestellt, wobei A die Einzugszone, B die Vorwärmzone, C die Kompressionszone, D die Entgasungszone, E die Druckaufbauzone und F die Homogenisierungszone ist. Aus dieser Darstellung ist ersichtlich, daß bei herkömmlichen dichtkämmenden gegenläufigen Doppelschneckenextrudern die in der Regel einteilige Schnecke 2 zwar Bereiche mit unterschiedlicher Steigung aufweist, jedoch die Steigungsrichtung über die gesamte Länge der Schnecke 2 gleichbleibt, nämlich als Förderelemente ausgebildet sind.

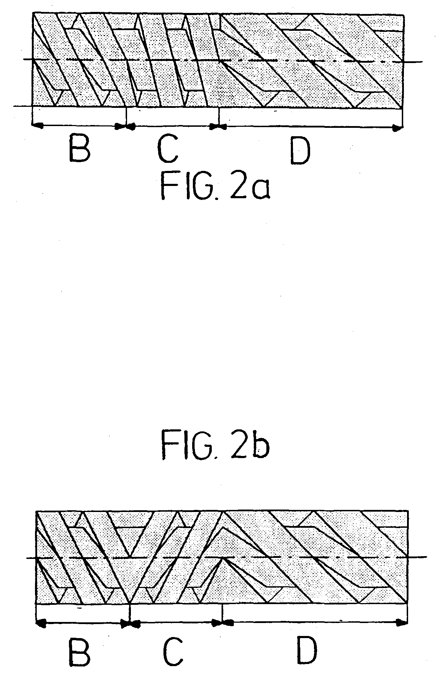

Dies geht auch aus Fig. 2a hervor, die eine Detailansicht zu Fig. 1b darstellt. Auch hier sind die Steigungen der Schnecke 2 innerhalb der Vorwärmzone B, der Kompressionszone C und der Entgasungszone D zwar unterschiedlich, jedoch bleibt die Steigungsrichtung gleich (jeweils rechts).

Fig. 2b zeigt, daß hingegen bei einer erfindungsgemäßen Schnecke 2 sich die Steigungsrichtung im Bereich der Kompressionszone C ändert. Hier wechselt die Steigungsrichtung von rechts in der Vorwärmzone B zu links in der Kompressionszone C und in der sich anschließenden Entgasungszone D liegt wieder eine rechte Steigungsrichtung vor. In der Kompressionszone C liegen also Rückförderelemente vor, wohingegen in den anderen Zonen (A, B, D, E, F) die Schneckenwindungen als Förderelemente ausgebildet sind. Die Zahl der Windungen der Schnecke 2 in der Kompressionszone C beträgt zwischen 1 und 10 und vorzugsweise zwischen 2 und 6. Der erfindungsgemäße Doppelschneckenextruder kann -wie hier dargestellt - ein paralleler Doppelschneckenextruder oder aber auch ein konischer (bzw. doppelkonischer) Doppelschneckenextruder sein.

## Patentansprüche

1. Doppelschneckenextruder, der zwei gegensinnig drehende, dichtkämmende Schnecken aufweist, **dadurch gekennzeichnet**, daß die Schnecken (2) in einer zwischen der Einfüllöffnung (3) und den Entgasungsbohrungen (5) angeordneten Kompressionszone (C) zumindest teilweise als Rückförderelemente mit einer im Vergleich zu den übrigen Zonen (A, B, D, E, F) der Schnecke (2) gegenläufigen Steigung ausgebildet sind.

2. Doppelschneckenextruder gemäß Anspruch 1, **dadurch gekennzeichnet**, daß sich die Rückförderelemente über 1 bis 10 Windungen, vorzugsweise über 2 bis 6 Windungen der Schnecke (2) erstrecken.

3. Doppelschneckenextruder gemäß Anspruch 1, **dadurch gekennzeichnet**, daß der Doppelschneckenextruder ein paralleler Extruder ist.

4. Doppelschneckenextruder gemäß Anspruch 1, **dadurch gekennzeichnet**, daß der Doppelschneckenextruder ein konischer oder doppelkonischer Extruder ist.

5. Doppelschneckenextruder gemäß Anspruch 1, **dadurch gekennzeichnet**, daß die Schnecken (2) aus einem Stück gefertigt sind.
